(19) Europäisches Patentamt
European Patent Office
Office européen des brevets

(11) **EP 1 601 123 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
*H04Q 7/28* *(2006.01)*  *H04L 12/18* *(2006.01)*
*H04Q 7/08* *(2006.01)*

(21) Anmeldenummer: **04012208.7**

(22) Anmeldetag: **24.05.2004**

(54) **Gleichwellenfunknetz zur Datenkommunikation**

Common wave system for data communication

Réseau radio à ondes communes pour la communication de donées

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**30.11.2005 Patentblatt 2005/48**

(73) Patentinhaber: **Siemens VDO Automotive AG**
**8212 Neuhausen (CH)**

(72) Erfinder: **Riedi, Urs**
**9247 Henau (CH)**

(74) Vertreter: **Kley, Hansjörg**
**Siemens AG**
**Postfach 22 16 34**
**80506 München (DE)**

(56) Entgegenhaltungen:
**EP-A- 0 789 464      DE-A- 2 645 901**
**US-A- 5 506 886      US-A- 6 052 064**

## Beschreibung

Die vorliegende Erfindung betrifft ein Gleichwellenfunknetz zur Datenkommunikation gemäss dem Oberbegriff des Patentanspruchs 1 und ein Verfahren zum Betrieb eines Gleichwellenfunknetzes gemäss dem Oberbegriff des Patentanspruchs 5.

Für den öffentlichen Nahverkehr sind Gleichwellenfunknetze sowohl für die Sprach- als auch die Datenkommunikation im Einsatz. Diese zeichnen sich dadurch aus, dass von mehreren Sende- und Empfangsantennen aus ein Gebiet versorgt wird. Dabei wird von den ortsfesten und mobilen Sendern jeweils pro Richtung, d.h. «downlink» und «uplink» die gleiche Frequenz benutzt. Dies erlaubt einen sogenannten Vollduplexbetrieb. Die Wirkungsweise und Konfigurationen solcher für den öffentlichen Nahverkehr benutzten Gleichwellenfunknetze sind im Dokument [1] beschrieben.

Ein Gleichwellenfunknetz beinhaltete ursprünglich, dass alle ortsfesten Funkstationen gleichzeitig auf der gleichen Frequenz ein elektromagnetisches Feld aussenden um dadurch mittels einer Modulation Sprache oder Daten zu übertragen. Bei einem solchen Gleichwellenfunknetz treten wegen der notwendigerweise auftretenden unterschiedlichen Laufzeiten Interferenzen auf, die auf Seite der meist mobilen empfangenden Funkstationen zu erheblichen Störungen führen. In [2] ist ein Gleichwellenfunknetz angegeben, bei dem zur Verringerung der Interferenzen ein kleiner Frequenzversatz und ein Phasenausgleich vorgesehen sind.

Insbesondere bei grossen Versorgungsgebieten und einer relativ hohen Dichte von mobilen Funkstationen führen die bekannten Ausprägungen von Gleichwellenfunknetzen in beiden Richtungen zu einem beschränkten Durchsatz von Telegrammen. Damit sind eine Beeinträchtigung der Abbildung der aktuellen Betriebssituation wie auch eine Beeinträchtigung einer gezielten Betriebsführung verbunden. Grundsätzlich wäre dieses Problem durch die Einführung eines zellulären (und digitalen) Bündelfunknetzes lösbar, beispielsweise auf der Basis des Systems TETRAPOL. Einer solchen Lösung steht jedoch ein hoher finanzieller Aufwand entgegen.

Das Problem der Laufzeitunterschiede und der sich ergebenden Interferenzen wird gemäss [3] so gelöst, dass in die Leitungen zu den festen Funkstationen Laufzeitausgleichsglieder eingefügt werden, dadurch kann jedoch nur ein Gebiet besser abgedeckt werden. Eine Erhöhung des Durchsatzes ist damit nicht möglich.

In US 6,052,064 [5] ist ein Gleichwellenfunknetz mit ortsfesten und mobilen Stationen angegeben, bei dem die aktuelle Postion einer mobilen Station aufgrund des Empfangspegels bei einer festen Station geschätzt wird und daraus dynamisch in einem Leitsystem eine Zurodnung von mobiler Station zu einem Versorgungsgebiet vorgenommen wird.

Der vorliegenden Erfindung liegt daher die Aufgabe zugrunde, ein Gleichwellenfunknetz und ein Verfahren zum Betrieb eines Gleichwellenfunknetzes anzugeben, bei denen der Durchsatz erheblich gesteigert werden kann und die relativ einfach in bestehenden Netzen integriert werden können.

Diese Aufgabe wird durch ein Gleichwellenfunknetz mit den im Patentanspruch 1 angegebenen Merkmalen gelöst sowie durch ein Verfahren mit den in Patentanspruch 5 angegebenen Merkmalen gelöst. Vorteilhafte Ausgestaltungen der Erfindung sind in weiteren Ansprüchen angegeben.

Durch die erfindungsgemässe Lösung gemäss den in Patentanspruch 1 und 5 angegebenen Merkmalen kann in einem Leitsystem eine Zuordnung der Position der betreffenden mobilen Funkstation zu einer Zelle vorgenommen werden. Dadurch brauchen «downlink» nur jene wenigstens eine ortsfeste Funkstation aktiviert zu werden, die die jeweilige Zelle abdeckt und darüber hinaus kann dank des Zeitstempels eine Mehrfachverarbeitung von gleichen aber von verschiedenen feten Stationen empfangenen Telegrammen vermieden werden. Somit kann auf einer bestehenden Infrastruktur durch gezielte Auswahl der wenigstens einen festen Funkstation der Durchsatz erhöht werden.

Die Erfindung wird nachfolgend anhand der Zeichnung beispielsweise näher erläutert. Dabei zeigt:

Figur 1    Prinzipdarstellung eines Gleichwellenfunknetzes in einer ersten topologischen Ausprägung mit Versorgungsgebieten A, B und C;

Figur 2    Prinzipdarstellung eines zellulären Gleichwellenfunknetzes in einer zweiten topologischen Ausprägung mit den Versorgungsgebieten A, B, C und E.

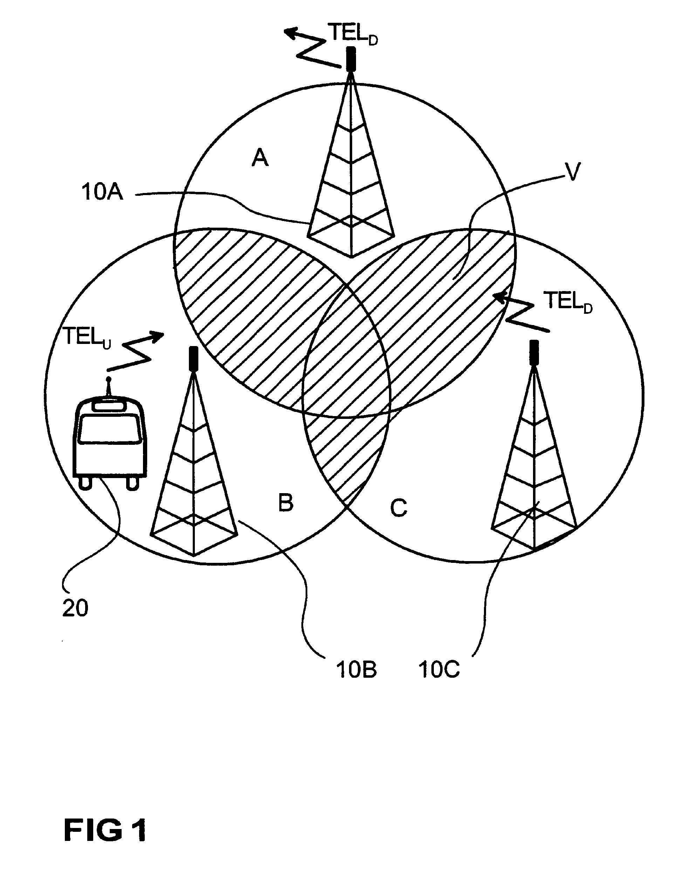

Figur 1 zeigt eine Prinzipdarstellung eines Gleichwellenfunknetzes mit verschiedenen ortsfesten Funkstationen 10A, 10B und 10C. Die Versorgungsgebiete A, B und C sind definiert durch die Reichweite der jeweiligen ortsfesten Funkstation 10A, 10B und 10C. Diese Definition über die Reichweite beinhaltet eine minimale Feldstärke E in [V/m] des von einer Funkstation ausgesendeten elektromagnetischen Feldes. Die Darstellung der Versorgungsgebiete A, B und C mit Kreisen gemäss der Figur 1 ist nur prinzipieller Art, in einer praktischen Umgebung braucht ein Versorgungsgebiet A oder B oder C nicht kreisförmig zu sein, da der minimale Pegel wesentlich durch die Topologie eines Geländes einschliesslich vorhandener Bauten beeinflusst wird. In der gezeigten ersten topologischen Ausprägung gemäss der Figur 1 kann es Teile von Versorgungsgebieten geben, die von mehr als einer ortsfesten Funkstation erreichbar sind. In einer pauschalen Darstellung gemäss der Figur 1 ist ein solches «überlappendes» Versorgungsgebiet schraffiert dargestellt und mit dem Bezugszeichen V bezeichnet. Bei dieser Darstellung ist zu beachten, dass die Grenzen der Versorgungsgebiete A, B und C nicht scharf sind, da auch beim Unterschreiten des vorgegebenen Pegels in [V/m] auch ausserhalb noch ein Empfang meist noch möglich ist. Umgekehrt kann eine feste Funkstation 10B auch noch von einer mobilen Funkstation erreicht werden, die ebenfalls ausserhalb des Versorgungsgebietes B liegt. Diese Unschärfe wird, wie weiter unten ausgeführt, durch die vorliegende Erfindung behoben und erlaubt einen höheren Durchsatz von Meldungen über das gesamte Gleichwellenfunknetz.

Die einzelnen ortsfesten Funkstationen 10A, 10B und 10C sind über Leitungen mit einem Leitsystem verbunden. Von den festen Funkstationen 10A, 10B, 10C werden empfangene Telegramme $Tel_U$ an das Leitsystem übermittelt. Im Leitsystem ist dadurch bekannt, welches Telegramm $TEL_U$ von welcher Funkstation 10A oder 10B oder 10C empfangen wurde.

Mit dem Bezugszeichen 20 ist eine z.B. auf einem Fahrzeug montierte mobile Funkstation 20 bezeichnet. Es ist jedoch gemäss der vorliegenden Erfindung möglich, dass die mobile Funkstation 20 auch portabel ist, z.B. für eine Aufsichts- oder Sicherheitsperson eines Nahverkehrsbetreibers. Ebenso kann eine solche «mobile» Funkstation 20 einer festen Stelle, z.B. einem Aufsichtsposten, zugeordnet sein, dies wird in diesem Kontext als quasistationär bezeichnet. Im folgenden wird nicht streng unterschieden zwischen mobiler und quasistationärer Funkstation 20.

Die geographische Position einer mobilen oder quasistationären Funkstation 20 ist auf dieser selbst als Positionsdatum Pos_Rec gespeichert. Solche Positionsdaten Pos_Rec sind durch ein dem mobilen Funkstation zugeordnetes oder in der mobilen Funkstation 20 enthaltendes Ortungssystem verfügbar. Ein solches Ortungssystem kann beispielsweise auf einem GPS-System und/oder auf der Basis von Infrarotbaken beruhen. Die Infrarotbaken sind in freien Abständen längs einer Bus- oder Tramlinie angeordnet. Entsprechende Sensoren auf dem Fahrzeug, Bus bzw. Tram ermöglichen die Feststellung der momentanen Position. Zusätzlich kann durch eine Fortschreibung aufgrund des zurückgelegten Weges die aktuelle Position extrapoliert werden und bei Annäherung an einer nachfolgenden Bake neu gesetzt werden.

Ereignisgesteuert oder periodisch werden von der mobilen Funkstation 20 Telegramme $TEL_U$ ausgesendet. Ereignisgesteuert kann die Aussendung auch dadurch erfolgen, dass alle mobilen Funkstationen 20 vom Leitsystem ein Telegramm $TEL_D$ erhalten, auf dessen Empfang hin ein Telegramm $TEL_U$ zu senden ist. Erfindungsgemäss enthalten diese Telegramme $TEL_U$ wenigstens die in Tabelle 1 enthaltene Information bzw. Inhalte. Rec_pos steht für die Position der betreffenden mobilen (oder quasistationären) Funkstation 20.

Tabelle 1: Auszug aus der Struktur eines Telegramm $TEL_U$

| Record | Bedeutung |
|---|---|
| : | |
| Rec_mob_id | Identität der mobilen Funkstation |
| Rec_pos | Momentane Position der mobilen Funkstation |
| Rec_time | Zeitstempel |
| : | |

Das von einer ortsfesten Funkstation 10 empfangene Telegramm $TEL_U$ mit den in Tabelle 1 dargestellten Records wird, wie vorstehend erläutert, dem Leitsystem übermittelt. Hier erfolgt nun in einer dynamisch geführten Datenbank eine Zuordnung von mobiler Funkstation 20 bzw. deren Identität zu einem Aufenthaltsgebiet. Diese Zuordnung wird nun nicht durch die Herkunft über die empfangende stationäre Funkstation 10A, 10B, 10C vorgenommen, sondern durch die im Telegramm $TEL_U$ enthaltene Position gemäss dem Feld Rec_pos. Anstelle des Begriff Feld wird meist der Begriff Record verwendet. Dieser Record Rec_pos beinhaltet die Position der mobilen Funkstation 20, z.B. als Koordinatenpaar eines orthogonalen Koordinatensystems. Auf diese Weise ist insbesondere die Herkunft eines Telegramms aus einer Schnittmenge V von wenigstens zwei überlappenden Versorgungsgebieten, gemäss der Figur 1 von 3 solchen Gebieten A, B und C erkennbar.

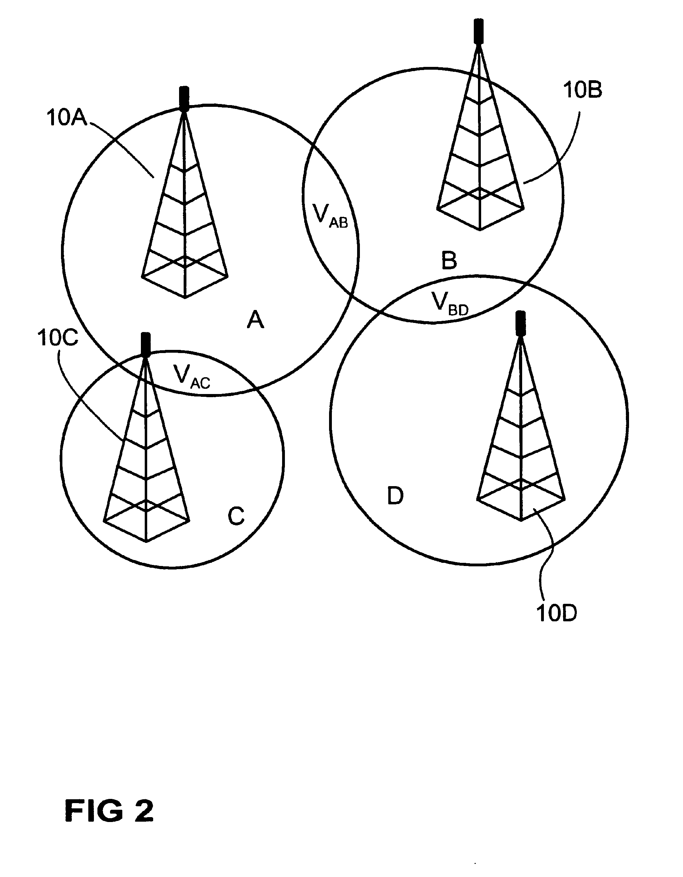

Im Sinne dieser Schrift steht der Begriff Zelle für die Vereinigung paarweiser überlappender oder disjunkter Versorgungsgebiete. So ist in Figur 1 ein zellulares Gleichwellenfunksystem dargestellt, das eine einzige Zelle umfasst, während in Figur 2 in einer anderen topologischen Ausprägung ein zellulares Gleichwellenfunksystem dargestellt ist, das im Sinne diese Schrift 3 Zellen als paarweise überlappende Versorgungsgebiete aufweist und 2 Zellen als disjunkte Versorgungsgebiete.

Da die Telegramme $TEL_U$ in einem weiteren Record Rec_time auch noch einen Zeitstempel enthalten, können im Leitsystem weitere von anderen festen Funkstationen 10A, 10B, 10C, 10D empfangene identische Telegramme verworfen werden. Dies hat den Vorteil, das auf der Seite der festen Funkstationen keine (falsche) Auswahl von Telegrammen aufgrund der empfangenen Pegel vorgenommen werden muss. Dadurch ist die Zuverlässigkeit der Uplink-Verbindung erheblich verbessert und damit auch die Konsistenz und Aktualität der Datenhaltung

```
Zuordnung mobile Funkstation ←→ Zelle bzw.
                                Aufenthaltsgebiet.
```

Diese gespeicherte Zuordnung «Mobile Funkstation → Aufenthaltsgebiet»wird nun benutzt, um zur Übermittlung eines Telegramms $TEL_D$ an eine bestimmte mobile Funkstation 20 die Aussendung über jene wenigstens eine feste Funkstation vorzunehmen, in deren Zelle sich die betreffende mobile Funkstation 20 befindet. Auf diese Weise können in verschiedenen Zellen mehrere Telegramme gleichzeitig oder um z.B. nur einen Zeitschlitz versetzt an verschiedene durch den Record Rec_mob_id identifizierte mobile Funkstationen 20 ausgesendet werden.

Im Leitsystem kann vorgängig gespeichert sein, dass für überlappende Gebiete V nur eine bestimmte ortsfeste Funkstation 10A, 10B, 10C, 10D vorgesehen ist oder dass mehreren festen Funkstationen 10A, 10B oder 10C eine Reihenfolge im Sinne einer Präferenz zugeordnet ist. Die Festlegung für den Fall, wo nur eine ortsfeste Funkstation 10A, 10B, 10C oder 10D vorgesehen ist, richtet sich z.B. nach der Verkehrsdichte des betreffenden ganzen Versorgungsgebietes, so wird für überlappende Versorgungsgebiete V, $V_{AC}$, $V_{AB}$, $V_{BD}$ jene ortsfeste Funkstationstation 10A, 10B, 10C oder 10D als erste bezeichnet, über die das Verkehrsaufkommen mutmasslich am geringsten ist. Die Präferenzen können nach statischen Kriterien vorgenommen werden, möglich ist auch eine dynamische Zuordnung insbesondere für den Fall, wo auf ein ausgesandtes Telegramm $TEL_D$ ein kontextabhängiges Quittungstelegramm zu erwarten ist. Ein Ausbleiben eines solchen Quittierungstelegramms führt zur Aussendung des ursprünglichen Telegramms über eine andere ortsfeste Funkstation.

Der Vorteil der Erfindung ist vor allem auch dann gegeben, wenn mehrere disjunkte Zellen vorhanden sind. Dies ist in Figur 2 beispielsweise mit den Zellen C und D und den partiell überlappenden Zellen A und B dargestellt. Gemäss der in Figur 2 dargestellten Konfiguration können die Funkstationen 10C, 10D echt parallel betrieben werden. Parallel heisst hier, dass in den gleichen Zeitschlitzen unabhängig voneinander und mit verschiedenen Inhalten Telegramme übertragen werden können. Dieser Vorteil kann aufgrund der statischen Konfiguration der Gebiete downlink genutzt werden.

**Liste der verwendeten Bezugszeichen**

| | |
|---|---|
| 10A, 10B, 10C, 10D | ortsfeste Funkstation |
| 20 | mobile Funkstation, z.B. auf Fahrzeug befindlich |
| A | Versorgungsgebiet der festen Funkstation 10A |
| B | Versorgungsgebiet der festen Funkstation 10B |
| C | Versorgungsgebiet der festen Funkstation 10C |
| D | Versorgungsgebiet der festen Funkstation 10D |
| V, $V_{AC}$, $V_{AB}$, $V_{BD}$ | Gebiet, das von mehr als einer ortsfesten Funkstation versorgt wird |
| $TEL_u$ | uplink ausgesendetes Telegramm, mobil → ortsfest |
| $TEL_d$ | downlink ausgesendetes Telegramm, ortsfest → mobil |

**Liste der verwendeten Abkürzungen**

| | |
|---|---|
| GPS | Global Positioning System |

**EP 1 601 123 B1**

TETRAPOL    TErrestrial Trunked RAdio system for POLice; weitere Angaben siehe http://www.tetrapol.com

**Literaturliste**

[1] Mobilfunk-Handbuch
Herausgeber: Funkspiegel Dipl.-Ing., Asternstr. 33 5600 Wuppertal.

[2] DE 26 45 901
«Sprech- und/oder Datenfunksystem»Licentia Patent-Verwaltungs-GmbH, 6000 Frankfurt;Veröffentlichungsdatum 23. März 1978.

[3] DE 32 03 678 C2
«Gleichwellenfunknetz»Licentia Patent-Verwaltungs-GmbH, 6000 Frankfurt;Veröffentlichungsdatum 11. August 1983.

[4] DE 29 31 923 C2
«Gleichwellenfunknetz»Licentia Patent-Verwaltungs-GmbH, 6000 Frankfurt;Veröffentlichungsdatum 11. August 1983.

[5] US 6,052,064
«Method and apparatus in a wireless messaging system for dynamic creation of directed simulcast zones»Assignee: Motorla, Inc., Schaumburg, Illinois

**Patentansprüche**

1.  Gleichwellenfunknetz zur Datenkommunikation, das ein Leitsystem und ortsfeste und mobile Funkstationen (10A, 10B, 10C, 10D; 20) aufweist, wobei das Gleichwellenfunknetz derart ausgestaltet ist, dass

    a) die ortsfesten Funkstationen (10A, 10B, 10C, 10D) mit dem Leitsystem verbunden sind;
    b) jeder ortsfesten Funkstation (10A, 10B, 10C, 10D) ein Versorgungsgebiet (A, B, C, D) zugeordnet ist, das mittels Positionsdaten (Rec_pos) im Leitsystem gespeichert ist;
    c) die Datenkommunikation zwischen ortsfester und mobiler Funkstation durch Telegramme ($TEL_d$, $TEL_u$) erfolgt;
    d) in jedem Telegramm die Identität (10A, 10B, 10C, 10D, Rec_mob_id) der Funkstationen enthalten ist;
    **dadurch gekennzeichnet, dass** das Gleichwellenfunknetz weiter derart ausgestaltet ist, dass
    e) auf der mobilen Funkstation (20) ihre aktuelle Position (Rec_pos) gespeichert ist und dass diese in einem an eine ortsfeste Funkstation (10A, 10B, 10C, 10D) übermittelten Telegramm ($TEL_u$) enthalten ist;
    f) im Leitsystem gemäss den empfangenen Telegrammen ($TEL_u$) die Position (Rec_pos) der betreffenden mobilen Funkstationen (20) gespeichert ist und dass daraus eine Zugehörigkeit von mobiler Funkstation (20) dynamisch zu einem Versorgungsgebiet (A, B, C, D) einer festen Funkstation (10A, 10B, 10C, 10D) als Aufenthaltsgebiet (A, B, C, D) im Leitsystem gespeichert wird;
    g) die dem Leitsystem zugeführten Telegrammen ($TEL_u$) einen Zeitstempel (Rec_time) der betreffenden mobilen Funkstationen (20) enthalten, wobei weitere identische von verschiedenen ortsfesten Funkstationen empfangene Telegramme ($TEL_u$) mit dem gleichen Zeitstempel (Rec_time) versehene Telegramme ($TEL_u$) vom Leitsystem nicht mehr verarbeitbar sind.

2.  Gleichwellenfunknetz nach Anspruch 1,
    **dadurch gekennzeichnet, dass** das Gleichwellenfunknetz weiter derart ausgestaltet ist, dass
    ein zu einer mobilen Funkstation (20) ausgesendetes Telegramm ($TEL_d$) nur über jene wenigstens eine ortsfeste Funkstation (10A, 10B, 10C, 10D) übermittelt wird, die dem Aufenthaltsgebiet (A, B, C, D) der mobilen Funkstation (20) zugeordnet ist.

3.  Gleichwellenfunknetz nach Anspruch 2,
    **dadurch gekennzeichnet, dass** das Gleichwellenfunknetz weiter derart ausgestaltet ist, dass
    für den Fall, wo sich die den mobilen Funkstationen (20) zugeordneten Aufenthaltsgebiete (C, E) nicht überlappen, Telegramme synchron mit verschiedenem Inhalt im gleichen Zeitschlitz zu mobilen Funkstationen (20) übertragbar sind.

4. Gleichwellenfunknetz nach Anspruch 2,
**dadurch gekennzeichnet, dass** das Gleichwellenfunknetz weiter derart ausgestaltet ist, dass
für den Fall, wo eine mobile Funkstation (20) einem mehrere Versorgungsgebiete (A, B, C, D) umfassenden Aufenthaltsgebiet (V, $V_{AB}$, $V_{AC}$) zugeordnet ist, die Aussendung eines Telegramms ($TEL_d$) alternativ

über eine vorgängig festgelegte ortsfeste Funkstation
(10A, 10B, 10C, 10D) erfolgt

oder

in zeitlicher Staffelung über mehrere in der Reihenfolge
festgelegte Funkstationen (10A, 10B, 10C, 10D) erfolgt oder
synchron über alle dem Aufenthaltsgebiet (V, $V_{AB}$, $V_{AC}$) zugeordneten Funkstationen (10A, 10B, 10C, 10D)
erfolgt.

5. Verfahren zum Betrieb eines Gleichwellenfunknetzes zur Datenkommunikation, das ein Leitsystem und ortsfeste und mobile Funkstationen (10A, 10B, 10C, 10D; 20) aufweist, wobei:

a) die ortsfesten Funkstationen (10A, 10B, 10C, 10D) sind mit dem Leitsystem verbunden;
b) jeder ortsfesten Funkstation (10A, 10B, 10C, 10D) ist ein Versorgungsgebiet (A, B, C, D) zugeordnet, das mittels Positionsdaten (Rec_pos) im Leitsystem gespeichert ist;
c) die Datenkommunikation zwischen ortsfester und mobiler Funkstation (10A, 10B, 10C, 10D; 20) erfolgt durch Telegramme ($TEL_d$, $TEL_u$) ;
d) in jeden Telegramm ist die Identität der Funkstationen (10A, 10B, 10C, 10D; Rec_mob_id) enthalten;
**dadurch gekennzeichnet, dass**
e) auf der mobilen Funkstation (20) ihre aktuelle Position (Rec_pos) gespeichert ist und dass diese in einem an eine ortsfeste Funkstation (10A, 10B, 10C, 10D) übermittelten Telegramm ($TEL_u$) enthalten ist;
f) im Leitsystem gemäss den empfangenen Telegrammen ($TEL_u$) die Position (Rec_pos) der betreffenden mobilen Funkstationen (20) gespeichert wird und dass daraus eine Zugehörigkeit von mobiler Funkstation (20) dynamisch zu einem Versorgungsgebiet (A, B, C, D) einer festen Funkstation (10A, 10B, 10C, 10D ) als Aufenthaltsgebiet vorgenommen und gespeichert wird;
g) die dem Leitsystem zugeführten Telegrammen ($TEL_u$) einen Zeitstempel (Rec_time) der betreffenden mobilen Funkstationen (20) enthalten, wobei weitere identische von verschiedenen ortsfesten Funkstationen empfangene Telegramme ($TEL_u$) mit dem gleichen Zeitstempel (Rec_time) versehene Telegramme ($TEL_u$) vom Leitsystem nicht mehr verarbeitbar sind.

6. Verfahren nach Anspruch 5,
**dadurch gekennzeichnet, dass**
ein zu einer mobilen Funkstation (20) ausgesendetes Telegramm ($TEL_d$) nur über jene wenigstens eine ortsfeste Funkstation (10A, 10B, 10C, 10D) übermittelt wird, die dem Aufenthaltsgebiet (A, B, C, D) der mobilen Funkstation (20) zugeordnet ist.

7. Verfahren nach Anspruch 6,
**dadurch gekennzeichnet, dass**
für den Fall, wo sich Aufenthaltsgebiete (C, B; C, D; A; D) nicht überlappen, Telegramme synchron mit verschiedenem Inhalt im gleichen Zeitschlitz zu einer mobilen Funkstation (20) übertragen werden.

8. Verfahren nach Anspruch 7,
**dadurch gekennzeichnet, dass**
für den Fall, wo eine mobile Funkstation (20) einem mehrere Versorgungsgebiete (A, B, C, D) umfassenden Aufenthaltsgebiet (V, $V_{AB}$, $V_{AC}$) zugeordnet ist, die Aussendung eines Telegramms ($TEL_d$) alternativ

über eine vorgängig festgelegte ortsfeste Funkstation
(10A, 10B, 10C, 10D) erfolgt

oder

in zeitlicher Staffelung über mehrere in der Reihenfolge
festgelegte Funkstationen (10A, 10B, 10C, 10D) erfolgt oder
synchron über alle dem Aufenthaltsgebiet (V, $V_{AB}$, $V_{AC}$) zugeordneten Funkstationen (10A, 10B, 10C, 10D)
erfolgt.

**Claims**

1. Common wave system for data communication, which has a control system and stationary and mobile radio stations (10A, 10B, 10C, 10D; 20), wherein the common wave system is designed such that

   a) the stationary radio stations (10A, 10B, 10C, 10D) are connected to the control system;
   b) each stationary radio station (10A, 10B, 10C, 10D) is assigned a service area (A, B, C, D) which is stored in the control system by means of position data (Rec_pos);
   c) the data communication between stationary and mobile radio station takes place by means of telegrams ($TEL_d$, $TEL_u$);
   d) the identity (10A, 10B, 10C, 10D, Rec_mob_id) of the radio stations is contained in each telegram;
   **characterized in that** the common wave system is further designed such that
   e) stored on the mobile radio station (20) is its current position (Rec_pos) and that this is contained in a telegram ($TEL_u$) sent to a stationary radio station (10A, 10B, 10C, 10D);
   f) the position (Rec_pos) of the relevant mobile radio stations (20) is stored in the control system in accordance with the received telegrams ($TEL_u$) and that from this an association of mobile radio station (20) dynamically to a service area (A, B, C, D) of a fixed radio station (10A, 10B, 10C, 10D) is stored in the control system as an abode area (A, B, C, D);
   g) the telegrams ($TEL_u$) sent to the control system contain a time stamp (Rec_time) of the relevant mobile radio stations (20), whereby it is no longer possible for further identical telegrams ($TEL_u$) received from different stationary radio stations and having the same time stamp (Rec_time) to be processed by the control system.

2. Common wave system according to claim 1, **characterized in that** the common wave system is further designed such that a telegram ($TEL_d$) dispatched to a mobile radio station (20) is transmitted only via that at least one stationary radio station (10A, 10B, 10C, 10D) which is assigned to the abode area (A, B, C, D) of the mobile radio station (20).

3. Common wave system according to claim 2, **characterized in that** the common wave system is further designed such that if the abode areas (C, E) assigned to the mobile radio stations (20) do not overlap, telegrams can be transmitted synchronously with varying content in the same time slot to mobile radio stations (20).

4. Common wave system according to claim 2, **characterized in that** the common wave system is further designed such that if a mobile radio station (20) is assigned to an abode area (V, $V_{AB}$, $V_{AC}$) containing a plurality of service areas (A, B, C, D), the dispatch of a telegram ($TEL_d$) is effected alternatively

   via a previously established stationary radio station
   (10A, 10B, 10C, 10D)

   or

   time-staggered via a plurality of radio stations (10A,
   10B, 10C, 10D) established in sequence

   or

   synchronously via all radio stations (10A, 10B, 10C, 10D) assigned to the abode area (V, $V_{AB}$, $V_{AC}$).

5. Method for operating a common wave system for data communication, which has a control system and stationary and mobile radio stations (10A, 10B, 10C, 10D; 20), wherein

   a) the stationary radio stations (10A, 10B, 10C, 10D) are connected to the control system;

b) each stationary radio station (10A, 10B, 10C, 10D) is assigned a service area (A, B, C, D) which is stored in the control system by means of position data (Rec_pos);

c) the data communication between stationary and mobile radio station (10A, 10B, 10C, 10D; 20) takes place by means of telegrams ($TEL_d$, $TEL_u$) ;

d) the identity of the radio stations (10A, 10B, 10C, 10D; Rec_mob_id) is contained in each telegram;

**characterized in that**

e) stored on the mobile radio station (20) is its current position (Rec_pos) and that this is contained in a telegram ($TEL_u$) sent to a stationary radio station (10A, 10B, 10C, 10D);

f) the position (Rec_pos) of the relevant mobile radio stations (20) is stored in the control system in accordance with the received telegrams ($TEL_u$) and that from this an association of mobile radio station (20) dynamically to a service area (A, B, C, D) of a fixed radio station (10A, 10B, 10C, 10D) as an abode area is effected and stored;

g) the telegrams ($TEL_u$) sent to the control system contain a time stamp (Rec_time) of the relevant mobile radio stations (20), whereby it is no longer possible for further identical telegrams ($TEL_u$) received from different stationary radio stations and having the same time stamp (Rec_time) to be processed by the control system.

6. Method according to claim 5, **characterized in that** a telegram ($TEL_d$) dispatched to a mobile radio station (20) is transmitted only via that at least one stationary radio station (10A, 10B, 10C, 10D) which is assigned to the abode area (A, B, C, D) of the mobile radio station (20).

7. Method according to claim 6, **characterized in that** if abode areas (C, B; C, D; A; D) do not overlap, telegrams are transmitted synchronously with varying content in the same time slot to a mobile radio station (20).

8. Method according to claim 7, **characterized in that** if a mobile radio station (20) is assigned to an abode area (V, $V_{AB}$, $V_{AC}$) containing a plurality of service areas (A, B, C, D), the dispatch of a telegram ($TEL_d$) is effected alternatively

via a previously established stationary radio station
(10A, 10B, 10C, 10D)

or

time-staggered via a plurality of radio stations (10A, 10B, 10C, 10D) established in sequence

or

synchronously via all radio stations (10A, 10B, 10C, 10D) assigned to the abode area (V, $V_{AB}$, $V_{AC}$).

**Revendications**

1. Réseau radioélectriques sur onde commune pour la communication de données qui comporte un système de guidage et des stations radioélectrique fixes et mobiles (10A, 10B, 10C, 10D ; 20), le réseau radioélectriques sur onde commune étant conformé de telle sorte que

a) les stations radioélectriques fixes (10A, 10B, 10C, 10D) sont reliées au système de guidage ;

b) une zone de couverture (A, B, C, D), qui est mémorisée dans le système de guidage au moyen de données de position (Rec_pos), est associée à chaque station radioélectrique fixe (10A, 10B, 10C, 10D) ;

c) la communication de données entre des stations radioélectriques fixes et mobiles est effectuée par télégrammes ($TEL_d$, $TEL_u$) ;

d) l'identité (10A, 10B, 10C, 10D, Rec_mob_id) des stations radioélectriques est contenue dans chaque télégramme ;

**caractérisé en ce que** le réseau radioélectrique à onde commune est en outre conformé de telle sorte que

e) la position actuelle (Rec_pos) de la station radioélectrique mobile (20) est mémorisée dans celle-ci et est contenue dans un télégramme ($TEL_u$) transmis à une station radioélectrique fixe(10A, 10B, 10C, 10D) ;

f) la position (Rec_pos) des stations radioélectriques mobiles (20) concernées est mémorisée dans le système de guidage conformément aux télégrammes reçus ($TEL_u$) et il en résulte qu'une affectation dynamique d'une station radioélectrique mobile (20) à une station radioélectrique fixe (10A, 10B, 10C, 10D) est mémorisée dans le système de guidage sous la forme d'une région de séjour (A, B, C, D) ;

g) les télégrammes (TEL$_u$) amenés au système de guidage contiennent une datation (Rec_time) des stations radioélectriques mobiles (20) concernées, d'autres télégrammes identiques (TEL$_u$) reçus par différentes stations radioélectriques fixes et ayant la même datation ne pouvant plus être traités par le système de guidage.

**2.** Réseau radioélectrique à onde commune selon la revendication 1, **caractérisé en ce que** le réseau radioélectrique à onde commune est conformé de telle sorte qu'un télégramme (TEL$_d$) envoyé à une station radioélectrique mobile (20) n'est transmis que par l'au moins une station radioélectrique fixe (10A, 10B, 10C, 10D) qui est associée à la région de séjour (A, B, C, D) de la station radioélectrique mobile (20).

**3.** Réseau radioélectrique à onde commune selon la revendication 2, **caractérisé en ce que** le réseau radioélectrique à onde commune est conformé de telle sorte que, dans le cas où les régions de séjour (C, E) associées aux stations radioélectriques mobiles (20) ne se recouvrent pas, des télégrammes peuvent être transmis de façon synchrone, avec un contenu différent et dans la même fenêtre temporelle, à des stations radioélectriques mobiles (20).

**4.** Réseau radioélectrique à onde commune selon la revendication 2, **caractérisé en ce que** le réseau radioélectrique à onde commune est conformé de telle sorte que, dans le cas où une station radioélectrique mobile (20) est associée à une région de séjour (V, V$_{AB}$, V$_{AC}$) comportant plusieurs zones de couverture (A, B, C, D), l'envoi d'un télégramme (TEL$_d$) est effectué alternativement

par une station radioélectrique fixe (10A, 10B, 10C, 10D) définie à l'avance, ou
dans le temps par plusieurs stations radioélectriques (10A, 10B, 10C, 10D) dans un ordre défini ou
de façon synchrone par toutes les stations radioélectriques (10A, 10B, 10C, 10D) associées à la région de séjour (V, V$_{AB}$, V$_{AC}$).

**5.** Procédé d'exploitation d'un réseau radioélectrique à onde commune pour la communication de données qui comporte un système de guidage et des stations radioélectriques fixes et mobiles (10A, 10B, 10C, 10D ; 20), dans lequel :

a) les stations radioélectriques fixes (10A, 10B, 10C, 10D) sont reliées au système de guidage ;
b) une zone de couverture (A, B, C, D), qui est mémorisée dans le système de guidage au moyen de données de position (Rec_pos), est associée à chaque station radioélectrique fixe (10A, 10B, 10C, 10D) ;
c) la communication de données entre des stations radioélectriques fixes et mobiles (10A, 10B, 10C, 10D ; 20) est effectuée par télégrammes (TEL$_d$, TEL$_u$) ;
d) l'identité (10A, 10B, 10C, 10D, Rec_mob_id) des stations radioélectriques est contenue dans chaque télégramme ;
**caractérisé en ce que**
e) la position actuelle (Rec_pos) de la station radioélectrique mobile (20) est mémorisée dans celle-ci et est contenue dans un télégramme (TEL$_u$) transmis à une station radioélectrique fixe(10A, 10B, 10C, 10D) ;
f) la position (Rec_pos) des stations radioélectriques mobiles (20) concernées est mémorisée dans le système de guidage conformément aux télégrammes reçus (TEL$_u$) et il en résulte qu'une affectation dynamique d'une station radioélectrique mobile (20) à une station radioélectrique fixe (10A, 10B, 10C, 10D) est effectuée et mémorisée dans le système de guidage sous la forme d'une région de séjour (A, B, C, D) ;
g) les télégrammes (TEL$_u$) amenés au système de guidage contiennent une datation (Rec_time) des stations radioélectriques mobiles (20) concernées, d'autres télégrammes identiques (TEL$_u$) reçus par différentes stations radioélectriques fixes et ayant la même datation ne pouvant plus être traités par le système de guidage.

**6.** Procédé selon la revendication 5, **caractérisé en ce qu'**un télégramme (TEL$_d$) envoyé à une station radioélectrique mobile (20) n'est transmis que par l'au moins une station radioélectrique fixe (10A, 10B, 10C, 10D) qui est associée à la région de séjour (A, B, C, D) de la station radioélectrique mobile (20).

**7.** Procédé selon la revendication 6, **caractérisé en ce que**, dans le cas où des régions de séjour (C, B ; C, D ; A ; D) ne se recouvrent pas, des télégrammes peuvent être transmis de façon synchrone, avec un contenu différent et dans la même fenêtre temporelle, à une station radioélectrique mobile (20).

**8.** Procédé selon la revendication 7, **caractérisé en ce que**, dans le cas où une station radioélectrique mobile (20) est associée à une région de séjour (V, V$_{AB}$, V$_{AC}$) comportant plusieurs zones de couverture (A, B, C, D), l'envoi d'un télégramme (TEL$_d$) est effectué alternativement

par une station radioélectrique fixe (10A, 10B, 10C, 10D) définie à l'avance, ou

dans le temps par plusieurs stations radioélectriques (10A, 10B, 10C, 10D) dans un ordre défini ou de façon synchrone par toutes les stations radioélectriques (10A, 10B, 10C, 10D) associées à la région de séjour (V, $V_{AB}$, $V_{AC}$)

**FIG 1**

**FIG 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6052064 A
- DE 2645901
- DE 3203678 C2
- DE 2931923 C2

**In der Beschreibung aufgeführte Nicht-Patentliteratur**

- Sprech- und/oder Datenfunksystem. *Licentia Patent-Verwaltungs-GmbH,* 23. Marz 1978
- Gleichwellenfunknetz. *Licentia Patent-Verwaltungs-GmbH,* 11. August 1983
- Method and apparatus in a wireless messaging system for dynamic creation of directed simulcast zones. Motorla, Inc